(19) Europäisches Patentamt
European Patent Office
Office européen des brevets

(11) **EP 2 223 942 B1**

(12) **EUROPEAN PATENT SPECIFICATION**

(45) Date of publication and mention
of the grant of the patent:
**12.11.2014 Bulletin 2014/46**

(51) Int Cl.:
*C08B 37/16* (2006.01)       *A61K 47/48* (2006.01)

(21) Application number: **09153819.9**

(22) Date of filing: **26.02.2009**

(54) **Process for the preparation of cyclodextrins composed of 9 to 21 glucose units**

Verfahren zur Herstellung von Cyclodextrinen aus von 9 bis 21 Glucoseeinheiten

Procédé pour la préparation de cyclodextrines composées de 9 à 21 unités de glucose

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**01.09.2010 Bulletin 2010/35**

(73) Proprietor: **Universität Leipzig
04109 Leipzig (DE)**

(72) Inventors:
• **Prof. Dr. Wolfgang Zimmermann
04109 Leipzig (DE)**
• **Dr. Mohd Noriznan Mokhtar
17000, Pasir Mas, Kelantan (MY)**
• **Kai-Uwe Lauckner
08340 Schwarzenberg (DE)**

(74) Representative: **Kailuweit & Uhlemann
Patentanwälte
Partnerschaft mbB
Postfach 320 139
01013 Dresden (DE)**

(56) References cited:
**EP-A- 0 215 169       DE-A1- 19 545 478
GB-A- 2 151 647**

• **MOHD NORIZNAN MOKHTAR: "Biocatalytic
production, preparation and characterization of
large-ring cyclodextrins, Dissertation" 26
January 2009 (2009-01-26), , TECHNISCHE
UNIVERSITÄT CHEMNITZ , XP002539612 * the
whole document ***
• **KOIZUMI K ET AL: "Isolation and characterization
of cyclic alpha-(1->4)-glucans having degrees of
polymerization 9-31 and their quantitative
analysis by high-performance anion-exchange
chromatography with pulsed amperometric
detection" JOURNAL OF CHROMATOGRAPHY,
ELSEVIER SCIENCE PUBLISHERS B.V.
AMSTERDAM, NL, vol. 852, no. 2, 13 August 1999
(1999-08-13), pages 407-416, XP004177402 ISSN:
0021-9673**

**Description**

This invention describes a method for the preparation of large-ring cyclodextrins (LR-CD) as novel complex-forming host molecules with a degree of polymerisation (DP) of 9 - 21. These compounds can be favourably applied in the pharmaceutical, cosmetics, and food industries. Furthermore, these LR-CD could find applications as novel host compounds in molecular recognition processes in nanobiotechnology (Endo et al., 2002).

The molecular structure of $CD_6$, $CD_7$ and $CD_8$ consisting of 6, 7 and 8 glucose molecules, respectively, resembles a hollow, truncated cone with a hydrophobic cavity. Owing to this structure, these CD can form complexes with various guest compounds and have therefore a wide range of applications in the food, cosmetics, and pharmaceutical industries. Since larger CD composed of more than eight glucose molecules have different cavity structures and sizes compared to $CD_6$, $CD_7$ and $CD_8$, they may offer unique molecular recognition properties (Zheng et al., 2002). Recently, LR-CD composed of between 9 and 39 glucopyranose units have been partially characterized (Taira et al. 2006). The molecular structure of $CD_9$ resembles a distorted boat shape. $CD_{10}$ and $CD_{14}$ show a butterfly-like structure to reduce steric strain in the ring with twisting of some glucose units to form flips and kinks (Larsen, 2002). The structure of $CD_{26}$ contains two single helices with 13 glucose units each in antiparallel direction (Larsen, 2002). The application of mixtures of LR-CD (also described as cyclic $\alpha$-1,4-glucans or cycloamylose) composed of rings with a very high DP as raw materials in the starch processing industry, for the composition for drinks, foods and food additives, the preparation of adhesives, or as starch substitutes in biodegradable plastics has been described previously (European Pat. No. 0710674B1, Japanese Pat. No. 08-311103, Japanese Pat. No. 09-000289, Japanese Pat. No. 2002-065291, Japanese Pat. No. 08-134104, U.S. Pat. No. 5,827,697, U.S. Pat. No. 6,248,566B1). LR-CD mixtures have been also used as artificial chaperons to refold denatured protein (Machida et al., 2000). Mixtures of LR-CD with a DP from 22 to several hundred have been shown to enhance the solubility of fullerenes in a co-grinding process (Fukami et al., 2004). The improvement of water solubility of glibenclamide (GCM) by co-grinding with highly branched cyclic dextrins has also been reported (Fukami et al., 2006).

These published applications of LR-CD are only referring to mixtures of CD, and not to isolated LR-CD of a single size. Recently, the application of $CD_{12}$ for the complexation of single-wall carbon nanotubes to enhance its solubility and partial separation has been described (Dodziuk et al., 2003), and a further publication discusses the application of $CD_9$ in chiral separation by electromigration methods (Wistuba et al., 2006).

LR-CD can be obtained in an enzymatic process using starch or amylose as substrates and glucanotransferases as biocatalysts. However, only the preparation of mixtures of LR-CD have been described in previous publications, often in low yields. Most publications refer to the use of enzymes for this process which are unable to synthesize LR-CD in the size range from $CD_9$ to $CD_{15}$.

The use of synthetic amylose as a substrate has been described previously, where LR-CD in low yields could be obtained at an early stage of reaction with a cyclodextrin glucanotransferase (CGTase) from *Bacillus* species (Qi et al., 2004; Terada et al., 1997; Terada et al., 2001; Zheng et al., 2002). The amount of LR-CD decreased during prolonged incubation with the enzyme since the yield and the size distribution of LR-CD in the course of a synthesis reaction are strongly influenced by the extent of the coupling and hydrolysis reactions by which the LR-CD initially formed are converted to smaller CD (Terada et al., 2001). Using synthetic amylose with an average molecular weight of 280.9 kDa as a substrate and a CGTase from *Bacillus macerans*, a maximum yield of LR-CD after 2 hours of reaction at 40°C and 60°C of about 35% and 50% of the total glucan, respectively, has been reported (Qi et al., 2004). However, synthetic amylose is an expensive to produce artificial substrate not commercially available preventing its use for the production of any larger amounts of LR-CD.

The use of amylopectin as substrate with Q-Enzyme ("branching enzyme", EC 2.4.1.18), D-Enzyme (EC 2.4.1.25) or CGTase from an alkalophilic *Bacillus sp.* A2-5a to generate mixtures of cyclic glucans with a degree of polymerization of 50 or more composed inner branched cyclic structures (average DP 10 to 100) and outer branched structures (DP 40 or more) is claimed by Japanese Pat. No. 08-134104, European Pat. No. 0 710 674 B1 and U.S. Pat. No. 6,248,566 B1. The Japanese Patent No. 09-000289 claims the production of cyclic glucan mixtures composed of $CD_{16}$ or larger by the action of a CGTase from an alkalophilic *Bacillus sp.* A2-5a. The product mixtures also contained $CD_6$, $CD_7$ and $CD_8$, and low yields of $CD_9$ to $CD_{15}$.

In the Japanese Pat. No. 08 311103 and U.S. Pat. No. 5,827,697, the use of D-Enzyme for the production of cyclic glucans composed of at least 14 $\alpha$-1,4-glycoside linkages per molecule and methods to produce their derivatives are described. However, LR-CD smaller than $CD_{14}$ cannot be produced by D-Enzyme.

The Japanese Pat. No. 2002-065291 the use of glycogen debranching enzyme (GDE, EC 2.4.1.25/EC 3.2.1.33) is disclosed for producing cyclic glucans composed of at least 50 $\alpha$-1,4-glycoside linkages per molecule and at least 11 $\alpha$-1,4-glycoside linkages per molecule or if a longer reaction time was chosen. The yield of cyclic glucans obtained was about 40 %. However, GDE could produce only extremely low yields of $CD_{11}$ to $CD_{13}$ even when incubated with synthetic amylose for 24 h (Yanase et al., 2002).

The main disadvantage of these processes is the fact that the enzymes used, such as Q-Enzyme, D-Enzyme, CGTase (*Bacillus sp.* A2-5a) and GDE (Japanese Pat. No. 08-134104, European Pat. No. 0 710 674 B1, U.S. Pat. No. 6,248,566 B1, Japanese Patent No. 09-000289, Japanese Pat. No. 08 311103, U.S. Pat. No. 5,827,697 and Japanese Pat. No. 2002-065291) cannot produce LR-CD in the size range from $CD_9$ to $CD_{13}$ and they are not commercially available preventing a production of larger amounts of LR-CD on an industrial scale. Furthermore, these patents describe only the production of cyclic glucan mixtures (some of them branched), and purification methods to obtain any single size of LR-CD have not been disclosed. The D-Enzyme (Japanese Pat. No. 08 311103 and U.S. Pat. No. 5,827,697) can produce only $CD_{14}$ and larger, but $CD_9$ to $CD_{13}$ can not be obtained. LR-CD in this size range can only be obtained by employing a CGTase as biocatalyst. However, in the Japanese Patent No. 09-000289, which discloses the use of a CGTase from *Bacillus sp.* A2-5a, $CD_9$ to $CD_{15}$ could be obtained only in very low yields.

The separation of CD of different sizes by a precipitation method is described by US Patent No. 4,970,164, using trichloroethylene and ethanol as precipitation agents to obtain $CD_6$, $CD_7$ and $CD_8$. The European Pat. No. 0 710 674 B1, Japanese Pat. No. 08-311103, Japanese Pat. No. 09-000289, Japanese Pat. No. 2002-065291, U.S. Pat. No. 5,827,697 and U.S. Pat. No. 6,248,566 B1 disclose methods for the precipitation of larger cyclic glucans, however in very small scale using 9 - 10 times volume of ethanol. The use of large amounts of organic solvent is the disadvantage of these processes, which would be difficult to handle for the production of any larger amounts of LR-CD. The use of acetone for the precipitation of CD has also been described (Koizumi et al., 1999), but also large amounts of the solvents would have to be employed to obtained substantial amounts of LR-CD.

In the first report on the isolation of large cyclodextrins by Pulley and French (1961), high temperature cellulose column chromatography was used to isolate small amounts of $CD_9$ to $CD_{12}$ prepared from glycogen by use of *B. macerans* CGTase (Larsen, 2002). Later, highly pure preparations of $CD_9$ to $CD_{21}$ in mg quantities were prepared by Ueda and co-workers from a commercially available CD preparation (Dexypearl K-50) (Endo et al., 1995; Endo et al., 1997a; Endo et al., 1997b; Endo et al., 1998; Miyazawa et al., 1995). The isolation procedures included several steps, such as hydrolysis of linear $\alpha$-1,4-glucan by glucoamylase, hydrolysis of branched $\alpha$-1,6-glucan by pullulanase and removal of glucose by fermentation with yeast. The small CD were then removed by complexation with bromobenzene and tetrachloroethane. Following this, several repeated chromatographic steps (reversed phase and chemically bonded ($NH_2$) phase chromatography) were needed to isolate the LR-CD. LR-CD containing up to 39 glucopyranose units have been purified in small amounts and characterized (Taira et al., 2006). However, LR-CD smaller than $CD_{22}$ could not be obtained using this method. The disadvantage of these methods is that they are extremely tedious involving a number of preparation and repeated chromatography steps. Furthermore, the amounts of LR-CD with a DP from 9 to 21 contained in the starting materials is very small resulting in extremely low yields of LR-CD (less than 0.1 %). A 3-step chromatography process which has been reported to isolate $CD_{36}$ - $CD_{39}$ in small amounts can also not be used to obtain LR-CD smaller than $CD_{22}$ (Taira et al., 2006).

The disadvantages of the previous preparation processes of LR-CD are solved in the process according to claim 1. Preferred implementations of the process according to the invention are subject of the dependent claims.

The process of the invention for the preparation of cyclodextrins composed of 9-21 glucose units, comprises the steps:

    i) Incubating starch with an amylose content over 50% with a cyclodextrin glucanotransferase (CGTase, EC 2.4.1.19) under specific conditions as claimed to obtain cyclodextrins composed of 9 to 60 glucose units,

    ii) precipitation with 3 to 7 volume units of a ketone

    iii) dissolving the precipitate and removing smaller cyclodextrins by adding higher alcohols, with 6 to 20 C-Atoms, and/or aromatic solvents to the supernatant and applying ultrasonication,

    iv) purification of the supernatant to obtain cyclodextrins with at least 9 and up to 60 glucose units by two chromatographic steps as claimed.

This starch is preferably obtained from peas, rice, maize or other grains, most preferred from pea.

For the biotransformation in step i) starch is preferably dissolved in an organic solvent, which does not hamper the activity of the glucanotransferase, preferably an aprotic solvent like dimethyl sulfoxide (DMSO) preferably in mixture with water. For the first step, the starch is preferably dissolved in 30 to 70 %, more preferably 40 to 60 % solvent, like DMSO.

The dissolved alpha-1,4-glucan is then added to an aqueous buffer (preferably with a pH of pH 4 to 7, most preferably pH 5 to 6, for instance an acetate buffer). The concentration of the alpha-1,4-glucan is preferably adjusted to 1 to 3.5 % (w/v), most preferably 2,5 to 3 %.

The glucanotransferase is preferably a CGTase obtained from *Bacillus macerans* or other Bacillus species. The CGTase from *B. macerans* has the advantage that it is well characterized and can be easily obtained commercially.

Surprisingly it was found that by adjusting the reaction conditions in step i), specifically the reaction time, reaction temperature and pH, as well as the glucanotransferase concentration, LR-CD in the size range of $CD_9$ to $CD_{21}$ can be obtained in high yields.

Step i) is performed at a temperature in the range from 50°C to 70°C, preferably 55°C to 65°C. Reaction times are chosen in the range from 20 to 120 min, preferred form 40 to 90 min. The pH is adjusted in the range of pH 4 to pH 7, preferred from pH 5 to 6.

The concentration of the CGTase is adjusted in the range from 0.1 to 3 U/ml, preferred from 0.5 to 2.5 U/ml.

After the reaction has been stopped (e. g. by boiling for 10 min), a glucoamylase is added, preferably in a concentration of 0.05 to 2 U/ml, more preferred 0.1 to 1 U/ml, most preferred 0.2 to 0.5 U/ml to remove linear oligosaccharides.

Surprisingly, it was found that the produced CD can be recovered from the reaction medium in good yields by a series of precipitation steps. A yield of 36 - 47 % CD (based on the starch substrate added) with a DP from 6 - 21 can be obtained in this way. The resulting product contains only small amounts of remaining glucose.

In the first step of the purification process (step ii), the LR-CD are separated from other reaction products and residual substrate. It was surprisingly found that by carefully adjusting the conditions of precipitation of the CD with an organic solvent fractions containing the CD product can be obtained in high yields without using large amounts of the solvent. The organic solvent used for the precipitation is preferably an aprotic solvent, e. g. a ketone, most preferably acetone.

The precipitation in step (ii) is preferably performed by adding 3 to 7, more preferred 4 to 5 volumes of solvent per volume.

The precipitation in step ii) is preferably carried out for 3 to 24 hours, more preferred 6 to 17 hours. The temperature is preferably chosen in a range from 10°C to 30°C, more preferred 20°C to 25°C.

The precipitate yields a crude CD mixture, while glucose and other components of the reaction solution remain in the supernatant.

After step ii) the precipitate is preferably washed with the solvent used for precipitation, preferably acetone and/or an alcohol and dried to obtain a crude CD mixture.

The crude CD mixture is dissolved in a polar solvent, preferably water.

In preliminary works, the inventors first tried to precipitate the LR-CD by complexing them with different agents, in particular macrocyclic compounds such as cycolododecanone or cyclotridecanone. However, a precipitation of the LR-CD was unsuccessful. Thus, the inventors had to look for an alternative way to purify the higher CDs from smaller CDs.

According to the invention, the smaller CD ($CD_6$ - $CD_8$) contained in the crude CD mixture are efficiently and selectively removed in step iii) by precipitation using complexation reactions. Complexing agents, such as 1-decanol, toluene and bromobenzene are added to form inclusion complexes with $CD_6$, $CD_7$ and $CD_8$, respectively. Surprisingly, it was found that the simultaneous removal of these smaller CD by complexation can be improved by ultrasonication of the reaction mixture.

Thus complexing agents are added in step iii) to selectively precipitate smaller CD, in particular $CD_6$, $CD_7$ and $CD_8$. The complexing agents are preferably chosen from higher alcohols, preferably with 6 to 20 C-Atoms, most preferred with 9 to 12 C-atoms, and/or aromatic solvents, preferably benzene and its derivatives, like halogenbenzene, toluene and xylol.

The complexing agent or the mixture of complexing agents is preferably added in a total concentration of 0.5 to 5 ml, preferably 1 to 3 ml, per gram of crude CD mixture (the precipitate obtained in step ii)).

Preferably a combination of higher alcohols and benzene derivatives is used as complexing agents. Preferably the higher alcohol(s) is or are added in a total concentration of 0.5 to 1.2 ml/g, more preferably 0.7 to 1 ml/g. Preferably the benzene derivative(s) is or are added in a total concentration of 0.5 to 1.4 ml/g, more preferably 0.7 to 1.2 ml/g.

In a preferred example a mixture of 1-decanol (preferably 0.5 to 1,2 ml/g, more preferably 0.7 to 1 ml/g), toluene (preferably 0.25 to 0.7 ml/g, more preferably 0.4 to 0.6 ml/g) and bromobenzene (preferably 0.25 to 0.7 ml/g, more preferably 0.4 to 0.6 ml/g) is added as complexing agent.

Relating to step iii) it was surprisingly found that by adding a complexing agents and applying ultrasonication to these CD fractions, LR-CD mixtures composed of $CD_9$ to $CD_{21}$ can be obtained in high yields.

The ultrasonication is preferably carried out for 5 to 45 minutes, preferably 10 to 30 minutes, preferably at temperature between 0°C to 50 °C. Advantageously this step can be carried out at room temperature.

The precipitated smaller CD are removed, preferably by filtration. The supernatant is preferably washed, preferably with an ether, most preferably diethyl ether, and preferably concentrated, e. g. under reduced pressure.

The remaining CD are now preferably precipitated again by precipitation with an organic solvent, preferably an aprotic solvent like acetone, as described before in step ii). The precipitate is preferably washed with an organic solvent preferably with acetone and/or an alcohol and dried to obtain a LR-CD mixture.

Single-size $CD_9$ to $CD_{21}$ can then be obtained in step iv) by preparative liquid chromatography using reversed phase or a combination of reversed (ODS) phase and an amino phase with polymeric surface containing secondary and/or tertiary amino groups (for example Polyamine II from YMC-Europe GmbH, Dinslaken, Germany).

$CD_{10}$ is obtained in high purity by a single reverse phased liquid chromatographic step for example ODS-AQ from YMC-Europe GmbH, Dinslaken, Germany). Advantageously $CD_{10}$ was obtained with the process according to the invention with high purity ($\geq$ 98 %) and a yield of up to 4 % by a single chromatographic step.

Also $CD_{11}$ and $CD_{12}$ can be obtained with a purity of 83 - 90 % by a single chromatographic step, preferably a reverse phased liquid chromatography. $CD_{13}$ - $CD_{15}$ can be obtained in this first chromatographic step with a purity of 60 % and $CD_9$ can be obtained in this first chromatographic step with a purity of around 25 %.

The fractions containing $CD_9$, $CD_{11}$-$CD_{21}$ obtained after the first reverse phased liquid chromatographic step are further purified in a second chromatographic step on a phase containing secondary and/or tertiary amino groups. Using these two chromatography steps, $CD_9$ as well as $CD_{11}$ - $CD_{21}$ can be obtained at high purity of at least 95 %, except for $CD_{15}$ and $CD_{21}$, which are obtained with a purity of 92 % and 94 %, respectively. A total yield of about 8% $CD_9$ and between 0.2 to 2.4% $CD_{11}$ - $CD_{21}$ is obtained.

Thus, finally single-size LR-CD in high purity and yields are obtained by only one or two preparative chromatography steps, preferably using reversed phase and amino phase chromatography. The process of the invention is the first method ever that allows obtaining LR-CD, in particular $CD_9$ to $CD_{21}$, in sufficient yield and purity for industrial applications.

The LR-CD obtained by the process according to the invention can favourably be applied as such or in complexed form with guest compounds in the pharmaceutical, chemical, cosmetics, and food industries.

## Examples

The invention is illustrated by the following figures and examples without being limited to these:

**Fig. 1** shows the results of a high performance liquid chromatographic analysis of partially purified CD contained in Fractions $S_1$ and $S_2$ obtained in example 4.

**Fig. 2** shows the elution profile of $CD_{10-15}$ obtained by preparative ODS-AQ chromatography of $S_1$.

**Fig. 3** shows the elution profile of $CD_{10-15}$ obtained by preparative ODS-AQ chromatography of $S_2$.

**Fig. 4** shows the elution profile of $CD_{16-21}$ obtained by preparative ODS-AQ chromatography.

**Fig. 5** shows the elution profile of $CD_{9-21}$ obtained by preparative polyamine II chromatography.

Elution was with aqueous acetonitrile (%) A: 58.4 % (5 ml/min); B: 57.6 % (5 ml/min); C: 57.0 % (5 ml/min); D: 55.0 % (5 ml/min); E: 52.8 % (4.6 ml/min).

Example 1: Preparation of the starch substrate

Preferably, the concentration of starch for the enzymatic synthesis is between 1 % and 3.5 %, most preferably 2.75 %. For a 2 L batch, 2.75 % (55 g) of high-amylose starch, preferably pea starch, is dissolved in 200 ml of DMSO (99 %) at 65°C. Distilled water (200 ml) is added slowly to the solution. The stirring is continued until all starch is completely dissolved at 65 °C. The starch solution is added to 450 ml of acetate buffer (200 mmol/L, pH 5.5, 60°C) and distilled water (60°C) is then added to a total volume of 1150 ml.

Example 2: Enzymatic synthesis of LR-CD

CGTase, for example from *Bacillus macerans* commercially available from Amano Enzyme Inc., Nagoya, Japan (600 U/mL) is used in concentrations preferably between 1 - 2 U/ml.

4.73 ml of CGTase is added to a 2 L batch (1.42 U/ml or 51.64 U/g) at 60°C and reacted with the starch prepared as in example 1 for 62 min. The reaction is stopped by boiling for 10 min. After cooling, unconverted starch is removed by centrifugation and filtration under vacuum. Glucoamylase (39.1 U/mg), for example from Sorachim, Chermin d'Entre, France, is added to the mixture with a final concentration of 0.293 U/ml and incubated overnight. The reaction is stopped by boiling for 10 min.

Example 3: Precipitation of LR-CD

The 2 L batch obtained in example 2 is concentrated under reduced pressure at 50°C (30 mbar) to a final volume of 400 ml. Acetone is added (2 L) and the mixture is left standing at room temperature overnight. The precipitate is removed and washed with acetone followed by washing with absolute ethanol. The precipitate (20 - 26 g) is dried in a dessicator. The crude product contains 40 - 50 % (w/w) LR-CD, less than 1 % (w/w) of glucose and remaining smaller CD.

Example 4: Selective precipitation of smaller CD by complexation

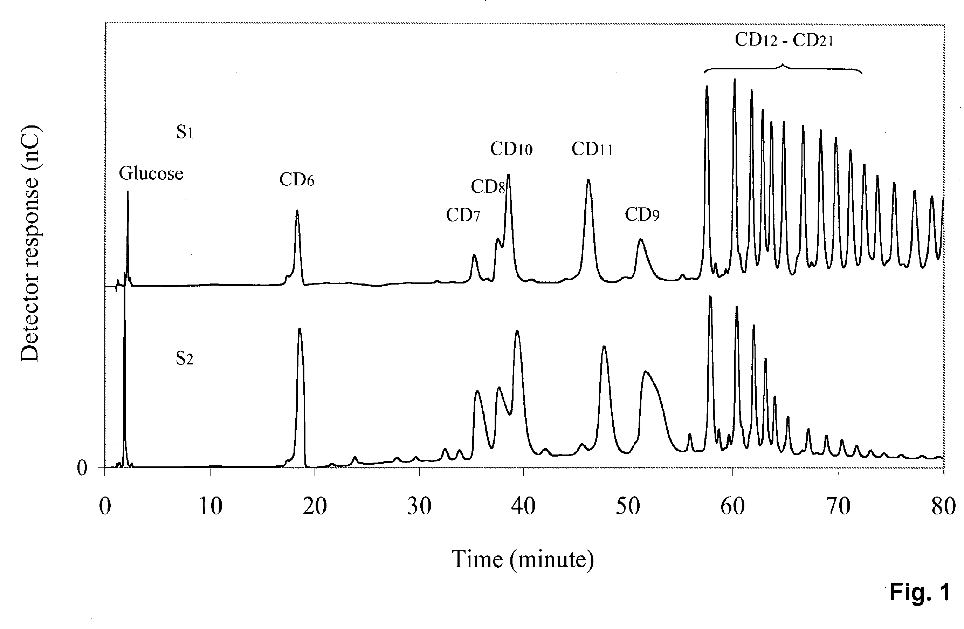

The crude CD product (10 g) obtained in example 3 is dissolved in 250 ml of distilled water. 1-Decanol (8.35 ml), toluene (4.6 ml) and bromobenzene (4.6 ml) are added and the mixture is ultrasonicated (ultrasonic converter UW 2200 and generator GM 2200, 200 W, Bandelin Electronic, Berlin, Germany) for 15 min at room temperature (60 W). The precipitated smaller CD are removed by filtration and the supernatant is washed with diethyl ether. The volume of the supernatant is concentrated to a final volume of 100 ml under reduced pressure. Three volumes of acetone are added to obtain the precipitated CD fraction $S_1$ (3 - 6 g) and a further 2 volumes of acetone are added to obtain the precipitated CD fraction $S_2$ (0.5 - 1 g). The precipitates are washed with acetone and absolute ethanol and dried under vacuum in a desiccator. $S_1$ contains mainly LR-CD ($CD_{10}$- $CD_{21}$) and very small amounts of $CD_6$, $CD_7$ and $CD_9$, and $S_2$ contains mainly LR-CD ($CD_9$ - $CD_{13}$) and small amounts of $CD_6$ - $CD_8$ (Fig. 1).

Example 5: Separation of LR-CD by reversed-phase ODS-AQ chromatography

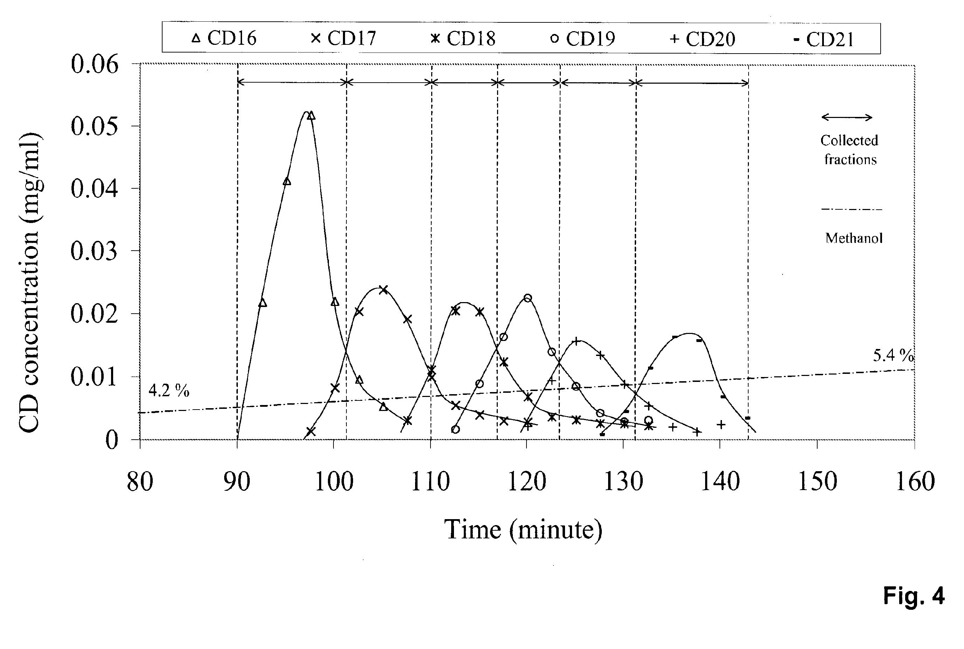

In the 1st step of preparative reversed-phase chromatography, ODS-AQ, (200g, pore size: 12 nm, diameter: 50 $\mu$m, for example from YMC-Europe GmbH, Dinslaken, Germany, and a gradient pump (AP-100/200, Armen Instrument, Saint Ave, France) with a flow rate of 24 ml/min is used. The column (41.5 cm, Ø 3.5 cm) is equilibrated with 2 % methanol for 60 min at a flow rate of 24 ml/min. 5 ml of LR-CD sample (100 mg/ml) - fraction in $S_1$ or $S_2$ obtained in example 4 - is injected onto the column and the LR-CD are eluted with a gradient of 2 % to 3 % methanol for 131 min. The gradient is then increased from 3 % to 5 % for 30 min and further increased from 5 % to 40 % methanol for 5 min and continued for 15 min. Fractions containing mainly isolated LR-CD are collected, pooled and freeze dried.

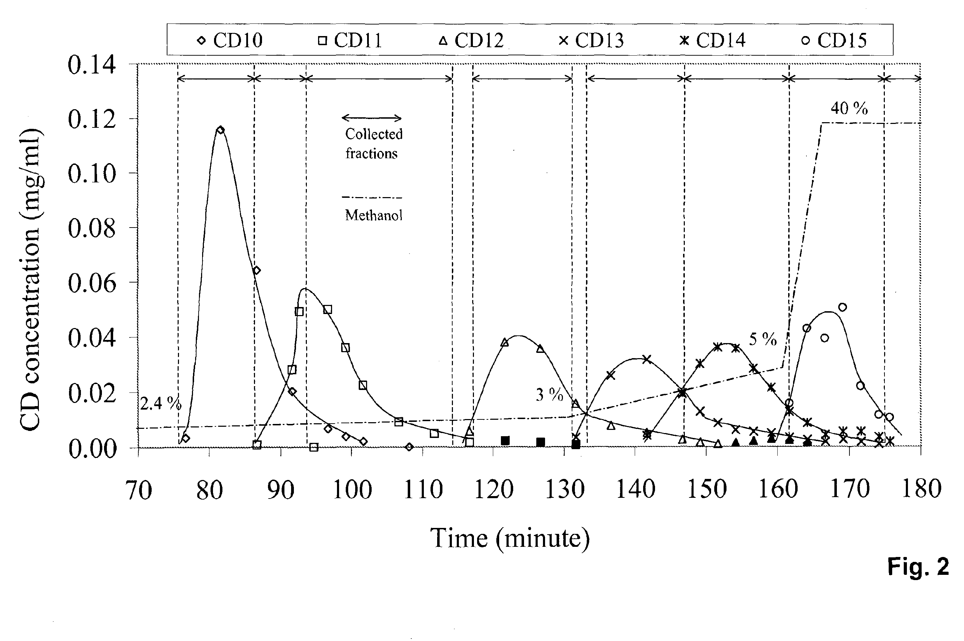

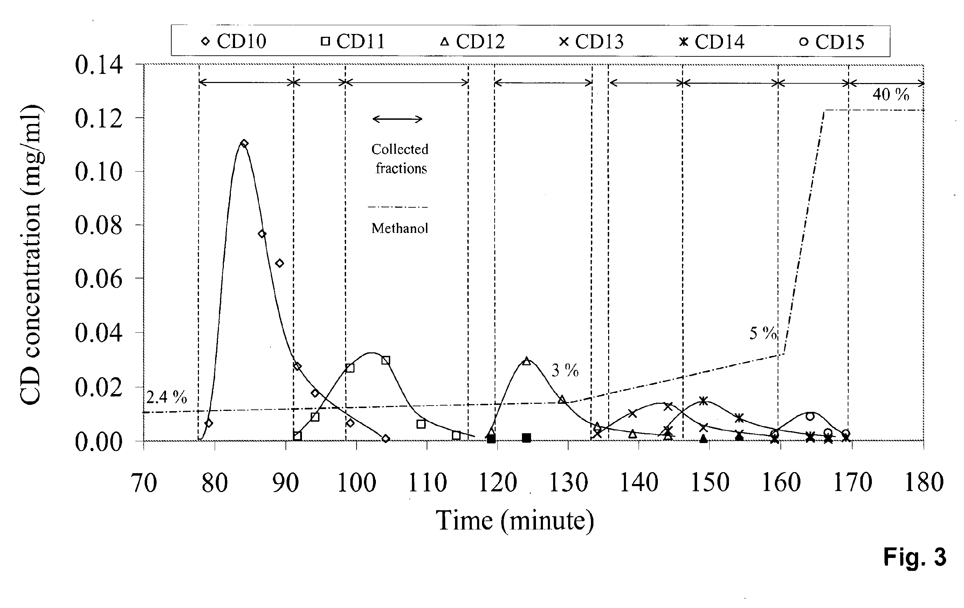

Fig. 2 and 3 show typical elution profiles of $CD_{10 - 15}$, contained in $S_1$ and $S_2$, respectively. $CD_{10}$ is obtained with high purity (98 %), and $CD_{11}$ and $CD_{12}$ are obtained with a purity of 85 - 87 % and 83 - 90 %, respectively (Table 1). $CD_{10}$ is obtained in a yield between 2.4 and 4.0 % depending on the composition of $S_1$ and $S_2$. $CD_{13}$ - 15 were obtained with 50 - 60 % purity. A further fraction obtained from $S_1$ contains a mixture of $CD_{16 - 21}$ and obtained from $S_2$ contains crude $CD_9$.
The separation of the fraction containing $CD_{16 - 21}$ is performed in a 2nd step of preparative ODS-AQ chromatography. The column is equilibrated with 3 % methanol for 60 min at a flow rate of 24 ml/min. 5 ml of LR-CD sample (50 mg/ml) is injected onto the column and the LR-CD are eluted with a gradient of 3 % to 5.4 % methanol methanol for 161 min. The gradient is then increased from 5.4 % to 40 % for 5 min and elution is continued for 15 min. Fractions containing mainly isolated LR-CD are collected, pooled and freeze dried. Fig. 4 shows a typical elution profile of $CD_{16 - 21}$ obtained.

**Table 1:** Isolated $CD_{10-12}$ obtained by a single step of ODS-AQ chromatography

| CD | $S_1$ | | | $S_2$ | | |
|---|---|---|---|---|---|---|
| | Mass (mg) | Purity (%)[a] | Yield (%)[b] | Mass (mg) | Purity (%)[a] | Yield (%)[b] |
| $CD_{10}$ | 94 | 98 | 2.4 | 121 | 98 | 4.0 |
| $CD_{11}$ | 121 | 87 | 3.0 | 47 | 85 | 1.6 |
| $CD_{12}$ | 110 | 90 | 2.8 | 82 | 83 | 2.7 |

$$^{a}\,Purity\,(\%) = \frac{Peak\ area\ of\ CD\ determined\ by\ HPAEC}{Total\ peak\ area\ of\ CD\ determined\ by\ HPAEC} \times 100\,\%$$

$$^{b}\,Yield\,(\%) = \frac{CD\ mass\ (mg)}{Total\ feed\ mass\ (mg)} \times 100\,\%$$

Example 6: Separation of LR-CD by Polyamine II chromatography

The partially purified LR-CD are subjected to Polyamine II chromatography (pore size: 12 nm, diameter: 5 $\mu$m, for example from YMC-Europe GmbH, Dinslaken, Germany), and a gradient pump (AP-100/200, Armen Instrument, Saint Ave, France) with a flow rate of 5 ml/min for separating of $CD_9$ to $CD_{16}$, and 4.6 ml/min for separating $CD_{17}$ to $CD_{21}$. The column (15 cm, Ø 2 cm) is equilibrated with acetonitrile-water. Fractions (0.5 ml, (20 mg/ml) containing mainly $CD_{11}$ to $CD_{14}$, are injected. Fraction (2.5 ml, (20 - 50 mg/ml) containing mainly $CD_9$, $CD_{15}$ to $CD_{21}$ are injected. LR-CD are eluted isocratically with aqueous acetonitrile in concentrations from 52 % - 60 %.

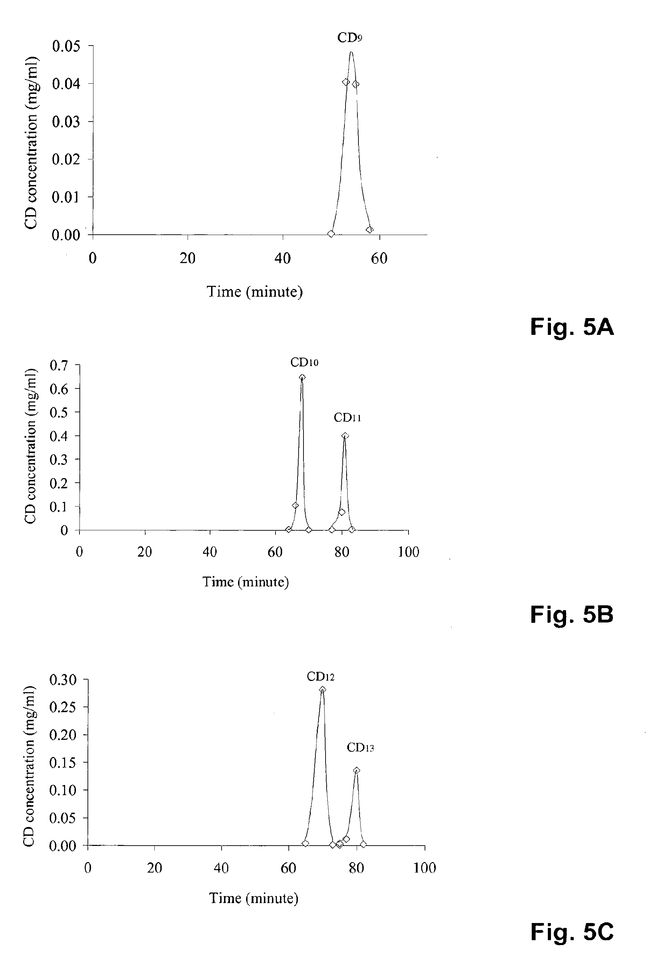

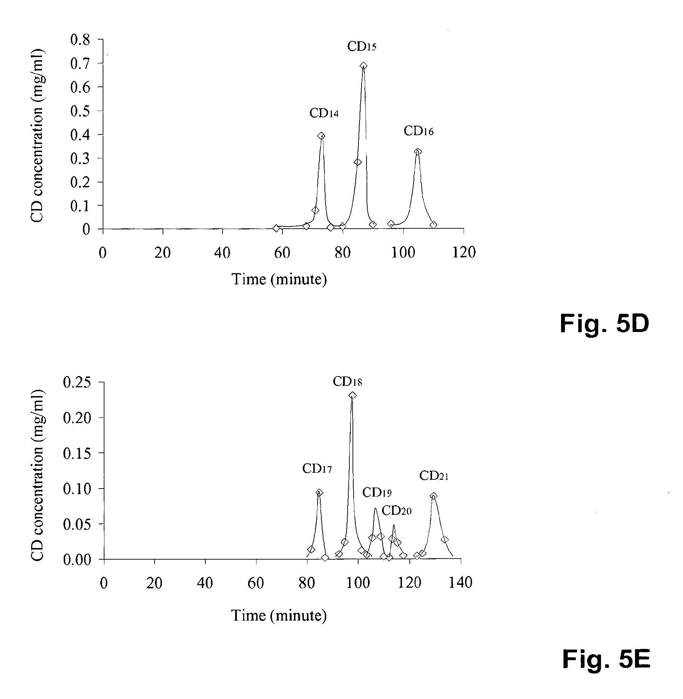

In Fig. 5, a typical elution profile of $CD_{9-21}$ obtained is shown. The yield and purity of the LR-CD obtained are shown in Table 2. The LR-CD could be obtained with a purity of at least 95 %, except $CD_{15}$ and $CD_{21}$, which were obtained with 92 % and 94 % purity, respectively.

**Table 2:** Purified $CD_9$, $CD_{11-21}$, obtained by preparative polyamine II chromatography

| CD | Feed CD mixture | | | No. of runs | Total feed mass (mg) | Obtained CD | | | |
|---|---|---|---|---|---|---|---|---|---|
| | Feed purity (%) | Conc. (mg/ml) | Inj. volume (ml) | | | Mass (mg) | Purity (%)[a] | Yield (%)[b] | Total yield (%)[c] |
| $CD_9$ | ~25 | 50 | 2.5 | 9 | ~1125 | 177 | 95 | 16 | ~8.0 |
| $CD_{11}$ | 60 - 80 | 20 | 0.5 | 11 | ~110 | 82 | 98 | 75 | ~1.6 |
| $CD_{12}$ | 40 - 50 | 20 | 0.5 | 18 | ~180 | 61 | 98 | 34 | ~0.8 |
| $CD_{13}$ | 50 - 60 | 20 | 0.5 | 18 | ~180 | 91 | 98 | 51 | ~2.0 |
| $CD_{14}$ | ~60 | 20 | 0.5 | 10 | ~100 | 61 | 98 | 61 | ~2.4 |
| $CD_{15}$ | ~50 | 20 | 2.5 | 3 | ~150 | 43 | 92 | 29 | ~0.9 |
| $CD_{16}$ | ~40 | 20 | 2.5 | 2 | ~100 | 27 | 99 | 27 | ~0.6 |
| $CD_{17}$ | ~25 | 20 | 2.5 | 2 | ~100 | 16 | 98 | 16 | ~0.3 |
| $CD_{18}$ | ~25 | 20 | 2.5 | 5 | ~250 | 25 | 98 | 10 | ~0.2 |
| $CD_{19}$ | ~20 | 20 | 2.5 | 4 | ~200 | 21 | 95 | 11 | ~0.3 |
| $CD_{20}$ | ~20 | 20 | 2.5 | 4 | ~200 | 21 | 94 | 11 | ~0.4 |
| $CD_{21}$ | ~20 | 20 | 2.5 | 4 | ~200 | 18 | 96 | 9 | ~0.3 |

$$^a\, \text{Purity}\,(\%) = \frac{\text{Peak area of CD determined by HPAEC}}{\text{Total peak area of CD determined by HPAEC}} \times 100\,\%$$

$$^b\, \text{Yield}\,(\%) = \frac{\text{CD mass (mg)}}{\text{Total feed mass (mg)}} \times 100\,\%$$

$$^c\, \text{Total yield}\,(\%) = \frac{\text{CD mass (mg)}}{\text{Total feed mass (ODS - AQ)}, S_1 \text{ or } S_2 \text{ (mg)}} \times 100\,\%$$

**References Cited**

U.S. patent documents

| | | |
|---|---|---|
| 5,827,697 | 10/1998 | Takaha et al. (Process for preparing glucans having a cyclic structure) |
| 6,248,566 B1 | 1/2001 | Imanaka et al. (Glucan having cyclic structure and method for producing the same) |
| 6,235,505 B1 | 5/2001 | Grull et al. (Process for the production of cyclodextrin) |
| 4,477,568 | 10/1984 | Hokse at al. (Process for the manufacture of cyclodextrin) |
| 4,970,164 | 11/1990 | Yang et al. (Methods of recovering and separating watersoluble cyclodextrins from cyclodextrin formation liquid) |
| 4,835,105 | 5/1989 | Seres et al. (Process for the preparation of high-purity gamma- and alpha-cyclodextrins) |

European patent documents

0 710 674 B1. 2/2002 Imanaka et al. (Method for producing a glucan having cyclic structure)

Japanese patent documents

| 08-311103 | 11/1996 | Takaha et al. (Glucan having cyclic structure and its production) |
| 09-000289 | 1/1997 | Takada et al. (Production of glucan having cyclic structure) |
| 08-134104 | 5/1996 | Takada et al. (Glucan having ring structure) |
| 2002-065291 | 3/2002 | Okada et al. (Method for manufacturing glucan having cyclic structure) |

Non-patent publications

Dodziuk, H., Ejchart, A., Anczewski, W., Ueda, H., Krinichnaya, E., Dolgonos, G. and Kutner, W., Water solubilization, determination of the number of different types of single-wall carbon nanotubes and their partial separation with respect to diameters by complexation with η-cyclodextrin. Chem. Commun.986-987, 2003

Endo, T., Ueda, H., Kobayashi, S. and Nagai, T., Isolation, purification and characterization of cyclomaltooctadecaose (η-cyclodextrin). Carbohydr. Res. (269) 369 - 373, 1995

Endo, T., Nagase, H., Ueda, H., Kobayashi, S. and Nagai, T., Isolation, purification and characterization of cyclomaltodecaose (ε-cyclodextrin), cyclomaltoundecaose (ζ-cyclodextrin) and cyclomaltotridecaose (θ-cyclodextrin). Chem. Pharm. Bull. (45) 532 - 536, 1997a

Endo, T., Nagase, H., Ueda, H., Suigihara, A., Kobayashi, S. and Nagai, T., Isolation, purification and characterization of cyclomaltotetradecaose (τ-cyclodextrin), cyclomaltopentadecaose (κ-cyclodextrin), cyclomaltohexadecaose (λ-cyclodextrin) and cyclomaltoheptadecaose (μ-cyclodextrin). Chem. Pharm. Bull. (45) 1856 - 1859, 1997b

Endo, T., Nagase, H., Ueda, H., Shigihara, A., Kobayashi, S. and Nagai, T., Isolation, purification and characterization of cyclomaltooctadecaose (ν-cyclodextrin), cyclomaltononadecaose (ξ-cyclodextrin), cyclomaltoeicosaose (o-cyclodextrin) and cyclomaltoheneicosaose (π-cyclodextrin). Chem. Pharm. Bull. 46(11) 1840 - 1843, 1998

Endo, T., Zheng, M. and Zimmermann, W., Enzymatic synthesis and analysis of large-ring cyclodextrins. Aust. J. Chem. (55) 39 - 48, 2002

Fukami, T., Mugishima, A., Suzuki, T., Hidaka, S., Endo, T., Ueda, H. and Tomono, K., Enhancement of water solubility of fullerene by cogrinding with mixture of cycloamyloses, novel cyclic α-1,4-glucans, via solid-solid mechanochemical reaction. Chem. Pharm. Bull. (52) 961 - 964, 2004

Fukami, T., Furuishi, T., Suzuki, T., Hidaka, S., Ueda, H. and Tomono, K., Improvement of solubility of poor water soluble drug by cogrinding with highly branched cyclic dextrin. J. Inclusion Phenom. (56) 61 - 64, 2006

Koizumi, K., Sanbe, S, Kubota, Y., Terada, Y. and Takaha, T., Isolation and characterization of cyclic α-(1→4)-glucans having degrees of polyamerization 9-31 and their quantitative analysis by high-performance anion-exchange chromatography with pulsed amperometric detection. J. Chromatogr. A (852) 407 - 416, 1999

Larsen, K.L., Large cyclodextrins. J. Inclusion Phenom. (43) 1 - 13, 2002

Machida, S., Ogawa, S., Xiaohua, S., Takaha, T., Fujii, K. and Hayashi, K., Cycloamylose as an efficient artificial chaperone for protein refolding. FEBS Lett. (486) 131 - 135, 2000

Miyazawa, I., Ueda, H., Nagase, H., Endo, T., Kobayashi, S. and Nagai, T., Physicochemical and inclusion complex production of δ-cyclodextrin. Eur.J. Pharm. Sci. (3) 153 - 162, 1995

Qi, Q., She, X., Endo, T. and Zimmermann, W., Effect of the reaction temperature on the transglycosylation reactions catalyzed by cyclodextrin glucanotransferase from Bacillus macerans for the synthesis of large-ring cyclodextrins. Tetrahedron (60) 799 - 806, 2004

Taira, H., Nagase, H., Endo, H. and Ueda, H., Isolation, purification and characterization of large-ring cyclodextrins (CD36 ∼ CD39). J. Inclusion Phenom. (56) 23 - 28, 2006

Terada, Y., Yanase, M., Takata, H., Takaha, T. and Okada, S., Cyclodextrins are not the major α-1,4-glucans produced by the initial action of cyclodextrins glucanotransferases on amylose. J. Biol. Chem. (272) 15729 - 15733, 1997

Terada, Y., Sanbe, H., Takaha, T., Kitahata, S., Koizumi, K. and Okada, S., Comparative study of the cyclization reactions of three bacterial cyclomaltodextrin glucanotransferase. Appl. Environ. Microbiol. (67) 1453 - 1460, 2001

Wistuba, D., Bogdanski, A., Larsen, K.L. and Schuring, V., δ-Cyclodextrin as novel chiral probe for enantiomeric separation by electromigration methods. Electrophoresis (27) 4359-4363, 2006

Yanase, M., Takata, H., Takaha, T., Kuriki, T., Smith, S.T. and Okada, S., Cyclization reaction catalyzed by glycogen debranching enzyme (EC 2.4.1.25/EC 3.2.1.33) and its potential for cycloamylose production. Appl. Environ. Microbiol. (68) 4233 - 4239, 2002

Zheng, M., Endo, T. and Zimmermann, W., Synthesis of large-ring cyclodextrins by cyclodextrins glucanotransferases from bacterial isolates. J. Inclusion Phenom. (44) 387 - 390, 2002

**Claims**

1. Process for the preparation of cyclodextrins (CD) composed of 9-21 glucose glucose units, with the steps:

   i) Incubating starch with an amylose content over 50 % with a cyclodextrin glucanotransferase (CGTase) (EC 2.4.1.19) at a temperature in the range from 50 to 70 °C and at reaction times in the range from 20 to 120 minutes and a pH in the range of pH 4 to pH 7 and an enzyme concentration of 0.1 to 3 U/ml to obtain cyclodextrins with 9 to 60 glucose units,
   ii) precipitation with 3 to 7 volume units of a ketone,
   iii) dissolving the precipitate and removing smaller cyclodextrins by adding higher alcohols with 6 to 20 C-atoms, and/or aromatic solvents to the supernatant and applying ultrasonication,
   iv) purification of the supernatant to obtain cyclodextrins with 9 to 60 glucose units, by two chromatographic steps, whereas $CD_{10}$ are obtained by a single reverse phased liquid chromatographic step and the fractions containing $CD_9$, $CD_{11}$-$CD_{21}$ obtained after the first chromatographic step are further purified in a second chromatographic step using a phase containing secondary and/or tertiary amino groups.

2. A process according to claim 1, wherein the starch is dissolved in a concentration of 1 to 3.5 % (w/v) in a mixture of an aqueous buffer and an organic solvent.

3. A process according to claim 1 or 2, wherein the CGTase is obtained from *Bacillus macerans.*

4. A process according to one of the claims 1 to 3, wherein the precipitation in step (ii) and/or step (iii) is performed by adding 4 to 6 volumes of solvent per volume.

5. A process according to one of the claims 1 to 4, wherein the higher alcohol and/or aromatic solvent is added in a total concentration of 0.5 to 5 ml per gram precipitate obtained in step ii).

**Patentansprüche**

1.  Verfahren zur Herstellung von Cyclodextrinen (CD) mit 9 bis 21 Glukoseeinheiten , mit den Schritten:

    i) Inkubieren von Stärke mit einem Amylosegehalt über 50% mit einem Cyclodextrin-Glucanotransferase (CGTase) (EC 2.4.1.19) bei einer Temperatur im Bereich von 50 bis 70 °C und Reaktionszeiten im Bereich von 20 bis 120 Minuten und einem pH-Wert in der Bereich von pH 4 bis pH 7 und einer Enzymkonzentration von 0,1 bis 3 U / ml um Cyclodextrine mit 9 bis 60 Glucoseeinheiten zu erhalten,
    ii) Fällung mit 3 bis 7 Volumeneinheiten eines Ketons,
    iii) Lösen des Niederschlag und Entfernen von kleineren Cyclodextrinen durch Zugabe von höheren Alkoholen mit 6 bis 20 C-Atomen und/oder aromatischen Lösemitteln zum Überstand und Anwendung von Ultraschall,
    iv) Reinigung des Überstands, um Cyclodextrine mit 9 bis 60 Glucoseeinheiten in zwei chromatographische Schritte zu erhalten, wobei $CD_{10}$ durch einen einzigen Umkehrphasen-Flüssigkeitschromatographie-Schritt erhalten wird und die Fraktionen enthaltend $CD_9$, $CD_{11}$-$CD_{21}$, welche nach dem Chromatographieschritt erhalten wurden, unter Verwendung einer Phase mit sekundären und/oder tertiären Aminogruppen in einem zweiten chromatographischen Schritt weiter aufgereinigt werden.

2.  Verfahren nach Anspruch 1, wobei die Stärke in einer Konzentration von 1 bis 3,5 % (w/v) in einer Mischung aus einem wässrigen Puffer und einem organischen Lösungsmittel gelöst wird.

3.  Verfahren nach Anspruch 1 oder 2, wobei die CGTase aus *Bacillus macerans* erhalten ist.

4.  Verfahren nach einem der Ansprüche 1 bis 3, wobei die Fällung in Schritt (ii) und/oder Schritt (iii) durch Zugabe von 4 bis 6 Volumina Lösungsmittel pro Volumen durchgeführt wird.

5.  Verfahren nach einem der Ansprüche 1 bis 4, worin der höhere Alkohol und/oder das aromatische Lösungsmittel zu dem in Schritt ii) erhaltenen Niederschlag in einer Gesamtkonzentration von 0,5 bis 5 ml pro Gramm zugegeben wird.

**Revendications**

1.  Procédé de préparation de cyclodextrines (CD) composées de 9 à 21 unités de glucose, avec les étapes :

    i) incubation d'amidon avec une teneur en amylose supérieure à 50 % avec une cyclodextrine glucanotransférase (CGTase) (EC 2.4.1.19) à une température dans la plage de 50 à 70°C et à des temps de réaction dans la plage de 20 à 120 minutes et un pH dans la plage de pH 4 à pH 7 et une concentration enzymatique de 0,1 à 3 U/ml pour obtenir des cyclodextrines avec 9 à 60 unités de glucose,
    ii) précipitation avec 3 à 7 unités de volume d'une cétone,
    iii) dissolution du précipité et élimination de cyclodextrines inférieures en ajoutant des alcools supérieurs avec 6 à 20 atomes de C et/ou des solvants aromatiques au surnageant et application d'une ultrasonification,
    iv) purification du surnageant pour obtenir des cyclodextrines avec 9 à 60 unités de glucose, par deux étapes chromatographiques, tandis que $CD_{10}$ sont obtenues par une étape chromatographique liquide en phase inverse unique et les fractions contenant $CD_9$, $CD_{11}$ à $CD_{21}$ obtenues après la première étape chromatographique sont davantage purifiées dans une seconde étape chromatographique en utilisant une phase contenant des groupes amino secondaires et/ou tertiaires.

2.  Procédé selon la revendication 1, dans lequel l'amidon est dissous à une concentration de 1 à 3,5 % (p/v) dans un mélange d'un tampon aqueux et d'un solvant organique.

3.  Procédé selon la revendication 1 ou 2, dans lequel la CGTase est obtenue à partir de Bacillus macerans.

4.  Procédé selon une des revendications 1 à 3, dans lequel la précipitation à l'étape (ii) et/ou l'étape (iii) est réalisée en ajoutant 4 à 6 volumes de solvant par volume.

5.  Procédé selon une des revendications 1 à 4, dans lequel l'alcool supérieur et/ou le solvant aromatique est ajouté à une concentration totale de 0,5 à 5 ml par gramme de précipité obtenu à l'étape ii).

Fig. 1

EP 2 223 942 B1

Fig. 2

EP 2 223 942 B1

Fig. 3

Fig. 4

EP 2 223 942 B1

Fig. 5A

Fig. 5B

Fig. 5C

**Fig. 5D**

**Fig. 5E**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0710674 B1
- JP 8311103 A
- JP 9000289 A
- JP 2002065291 A
- JP 8134104 A
- US 5827697 A

- US 6248566 B1
- US 4970164 A
- US 6235505 B1
- US 4477568 A
- US 4835105 A

**Non-patent literature cited in the description**

- **DODZIUK, H. ; EJCHART, A. ; ANCZEWSKI, W. ; UEDA, H. ; KRINICHNAYA, E. ; DOLGONOS, G. ; KUTNER, W.** Water solubilization, determination of the number of different types of single-wall carbon nanotubes and their partial separation with respect to diameters by complexation with $\eta$-cyclodextrin. *Chem. Commun,* 2003, 986-987
- **ENDO, T. ; UEDA, H. ; KOBAYASHI, S. ; NAGAI, T.** Isolation, purification and characterization of cyclomaltooctadecaose ($\eta$-cyclodextrin). *Carbohydr. Res.,* 1995, 369-373
- **ENDO, T. ; NAGASE, H. ; UEDA, H. ; KOBAYASHI, S. ; NAGAI, T.** Isolation, purification and characterization of cyclomaltodecaose ($\varepsilon$-cyclodextrin), cyclomaltoundecaose ($\zeta$-cyclodextrin) and cyclomaltotridecaose ($\theta$-cyclodextrin). *Chem. Pharm. Bull.,* 1997, 532-536
- **ENDO, T. ; NAGASE, H. ; UEDA, H. ; SUIGIHARA, A. ; KOBAYASHI, S. ; NAGAI, T.** Isolation, purification and characterization of cyclomaltotetradecaose ($\tau$-cyclodextrin), cyclomaltopentadecaose ($\kappa$-cyclodextrin), cyclomaltohexadecaose ($\lambda$-cyclodextrin) and cyclomaltoheptadecaose ($\mu$-cyclodextrin). *Chem. Pharm. Bull.,* 1997, 1856-1859
- **ENDO, T. ; NAGASE, H. ; UEDA, H. ; SHIGIHARA, A. ; KOBAYASHI, S. ; NAGAI, T.** Isolation, purification and characterization of cyclomaltooctadecaose (v-cyclodextrin), cyclomaltononadecaose ($\xi$-cyclodextrin), cyclomaltoeicosaose (o-cyclodextrin) and cyclomaltoheneicosaose ($\pi$-cyclodextrin). *Chem. Pharm. Bull.,* 1998, vol. 46 (11), 1840-1843
- **ENDO, T. ; ZHENG, M. ; ZIMMERMANN, W.** Enzymatic synthesis and analysis of large-ring cyclodextrins. *Aust. J. Chem.,* 2002, 39-48

- **FUKAMI, T. ; MUGISHIMA, A. ; SUZUKI, T. ; HIDAKA, S. ; ENDO, T. ; UEDA, H. ; TOMONO, K.** Enhancement of water solubility of fullerene by cogrinding with mixture of cycloamyloses, novel cyclic $\alpha$-1,4-glucans, via solid-solid mechanochemical reaction. *Chem. Pharm. Bull.,* 2004, 961-964
- **FUKAMI, T. ; FURUISHI, T. ; SUZUKI, T. ; HIDAKA, S. ; UEDA, H. ; TOMONO, K.** Improvement of solubility of poor water soluble drug by cogrinding with highly branched cyclic dextrin. *J. Inclusion Phenom.,* 2006, 61-64
- **KOIZUMI, K. ; SANBE, S ; KUBOTA, Y. ; TERADA, Y. ; TAKAHA, T.** Isolation and characterization of cyclic $\alpha$-(1$\rightarrow$4)-glucans having degrees of polyamerization 9-31 and their quantitative analysis by high-performance anion-exchange chromatography with pulsed amperometric detection. *J. Chromatogr. A,* 1999, 407-416
- **LARSEN, K.L.** Large cyclodextrins. *J. Inclusion Phenom.,* 2002, 1-13
- **MACHIDA, S. ; OGAWA, S. ; XIAOHUA, S. ; TAKAHA, T. ; FUJII, K. ; HAYASHI, K.** Cycloamylose as an efficient artificial chaperone for protein refolding. *FEBS Lett.,* 2000, 131-135
- **MIYAZAWA, I. ; UEDA, H. ; NAGASE, H. ; ENDO, T. ; KOBAYASHI, S. ; NAGAI, T.** Physicochemical and inclusion complex production of $\delta$-cyclodextrin. *Eur. J. Pharm. Sci.,* 1995, 153-162
- **QI, Q. ; SHE, X. ; ENDO, T. ; ZIMMERMANN, W.** Effect of the reaction temperature on the transglycosylation reactions catalyzed by cyclodextrin glucanotransferase from Bacillus macerans for the synthesis of large-ring cyclodextrins. *Tetrahedron,* 2004, 799-806
- **TAIRA, H. ; NAGASE, H. ; ENDO, H. ; UEDA, H.** Isolation, purification and characterization of large-ring cyclodextrins (CD36 ~ CD). *J. Inclusion Phenom.,* 2006, 23-28

- **TERADA, Y. ; YANASE, M. ; TAKATA, H. ; TAKAHA, T. ; OKADA, S.** Cyclodextrins are not the major $\alpha$-1,4-glucans produced by the initial action of cyclodextrins glucanotransferases on amylose. *J. Biol. Chem.,* 1997, 15729-15733
- **TERADA, Y. ; SANBE, H. ; TAKAHA, T. ; KITAHATA, S. ; KOIZUMI, K. ; OKADA, S.** Comparative study of the cyclization reactions of three bacterial cyclomaltodextrin glucanotransferase. *Appl. Environ. Microbiol.,* 2001, 1453-1460
- **WISTUBA, D. ; BOGDANSKI, A. ; LARSEN, K.L. ; SCHURING, V.** $\delta$-Cyclodextrin as novel chiral probe for enantiomeric separation by electromigration methods. *Electrophoresis,* 2006, 4359-4363
- **YANASE, M. ; TAKATA, H. ; TAKAHA, T. ; KURIKI, T. ; SMITH, S.T. ; OKADA, S.** Cyclization reaction catalyzed by glycogen debranching enzyme (EC 2.4.1.25/EC 3.2.1.33) and its potential for cycloamylose production. *Appl. Environ. Microbiol.,* 2002, 4233-4239
- **ZHENG, M. ; ENDO, T. ; ZIMMERMANN, W.** Synthesis of large-ring cyclodextrins by cyclodextrins glucanotransferases from bacterial isolates. *J. Inclusion Phenom.,* 2002, 387-390